# EUROPÄISCHE PATENTSCHRIFT

(11) **EP 0 776 949 B1**
(45) Veröffentlichungstag und Bekanntmachung des Hinweises auf die Patenterteilung: **03.04.2002**
(21) Anmeldenummer: 96118931.3
(22) Anmeldetag: 26.11.1996
(51) Int. Cl.: C09D 5/03, C09D 133/04, C08F 8/08

(54) **Wärmehärtbarer Pulverlack**
Heat-curable powder coating
Revêtement en poudre thermodurcissable

(30) Priorität: 01.12.1995 DE 19544930
(43) Veröffentlichungstag der Anmeldung: 04.06.1997
(73) Patentinhaber: EMS-INVENTA AG, 8002 Zürich (CH)
(72) Erfinder: Kaplan, Andreas, Dr. rer. nat., 7000 Chur (CH); Gisler, René, Chem. HTL, 7000 Chur (CH); Reich, Albert, 7014 Trin (CH)
(74) Vertreter: Becker Kurig Straus

(56) Entgegenhaltungen:
- EP-A- 0 264 983
- EP-A- 0 750 025

## Beschreibung

Die Erfindung betrifft ein Verfahren zur Herstellung von wärmehärtbaren Beschichtungsmassen, auch Pulverlacke genannt, auf Basis von glycidyletherhaltigen Acrylat-Copolymerisaten, geeigneten Härtungsmitteln und/oder Pigmenten und/oder Füllstoffen und/oder Additiven, wobei das epoxidhaltige Acrylat-Copolymerisat durch polymeranaloge Umsetzung von hydroxylfunktionellen Acrylat-Copolymerisaten mit Epihaloalkanen herstellbar ist.
Die Erfindung betrifft weiterhin Pulverlacke, die nach dem vorgenannten Verfahren herstellbar sind sowie die Verwendung des Pulverlacks zur Herstellung von Schutzschichten.

Epoxidgruppenhaltige Acrylat-Copolymerisate und deren Verwendung als Bindemittel in Pulverlacken sind bereits bekannt. Sie sind z.B. in den folgenden Patenten beschrieben: US-A-3,781,379, US-A-4,042,645 und US-A-4,346,144. Als Härter kommen dabei mehrbasische Säuren, bevorzugt zweibasische Säuren, deren Anhydride oder Substanzen, die eine zweibasische Säure unter Härtungsbedingungen bilden, zur Anwendung. Als Härter können prinzipiell auch andere carboxylfunktionelle Verbindungen, wie z.B. amorphe und/oder semikristalline Polyesterharze und/oder Acrylatharze mit freien Carboxylgruppen verwendet werden.

Die in den oben genannten Patenten beschriebenen Copolymerisate enthalten alle Glycidylacrylat bzw. Glycidylmethacrylat. Der Rest des Copolymeren besteht aus anderen ungesättigten Monomeren, d.h. es handelt sich um glycidylesterhaltige Acrylat-Copolymere. Die Herstellung von monomerem Glycidyl(meth)acrylat ist aus technischer Sicht nicht einfach, da Glycidyl(meth)acrylat leicht polymerisiert, und die Isolation der reinen Monomeren sehr problematisch ist. Neben einer kurzen Lagerstabilität von Glycidyl(meth)acrylat bereitet auch dessen hohe Toxizität bei der Verarbeitung Probleme. Deshalb ist die Herstellung von glycidylesterhaltigen Acrylatpolymeren mittels Copolymerisationvon Glycidyl(meth)acrylat problematisch und nicht empfehlenswert. Ein weiterer Nachteil dieses Verfahrens ist, daß man Wasser als Reaktionsmedium nicht verwenden kann.

US-3,294,769 beschreibt in allgemeiner Form ein Verfahren zur Herstellung von glycidylestergruppenhaltigen Acrylatpolymeren durch Umsetzung von carboxylfunktionellen Acrylatpolymeren mit Epichlorhydrin.

Die Verseifung von Methylmethacrylat-Polymeren und die anschließende Umsetzung mit Epichlorhydrin ist von Sandner et al. (siehe Angew. Makromol. Chemie 181 (1990) 171-182 und Makromol. Chem. 192 (1991) 762-777) untersucht worden.

Daher ist es Aufgabe der Erfindung, ein neues einfaches Verfahren zur Herstellung von wärmehärtbaren Pulverlacken auf Basis von glycidylether-haltigen Acrylat-Copolymerisaten bereit zu stellen, die als Bindemittel spezielle Acrylat-Copolymere enthalten und die die oben genannten Nachteile des Standes der Technik vermeiden. Die nach dem Verfahren herstellbaren Pulverlacke sollen zur Herstellung von Schutzschichten verwendet werden.

Diese Aufgabe wird durch das Verfahren zur Herstellung von Pulverlacken nach Anspruch 1, den Pulverlack nach Anspruch 16 sowie durch die Verwendung nach Anspruch 17 gelöst.

In den Unteransprüchen sind vorteilhafte Ausführungsformen der Erfindung enthalten.

Überraschenderweise wurde festgestellt, daß glycidyl-ethergruppenhaltige Acrylat-Copolymerisate in einer polymeranalogen Reaktion durch die Umsetzung von hydroxylfunktionellen Acrylat-Copolymerisaten mit Epihaloalkanen hergestellt werden können.

Gegenstand der Erfindung ist daher ein Verfahren zur Herstellung von wärmehärtbaren Pulverlacken, enthaltend:
(B) ein glycidyletherhaltiges Acrylat-Copolymerisat,
(C) eine aliphatische und/oder cycloaliphatische mehrbasische Säure und/oder deren Anhydrid und/oder ein polyolmodifizierter Anhydrid einer mehrbasischen Säure und/oder amorphe oder semikristalline carboxylfunktionelle Copolyesterharze und/oder carboxylfunktionelle Acrylatharze,
(D) gegebenenfalls Füllstoffe und/oder Pigmente und/oder Additive,
wobei das glycidyletherhaltige Acrylat-Copolymerisat (B) ein Molekulargewicht (Mw) von 1.000 bis 30.000 und eine Glasumwandlungstemperatur von 20 bis 120 °C besitzt und dadurch erhältlich ist, daß in einem ersten Schritt ein Copolymerisat (A) hergestellt wird, das Hydroxylgruppen enthält, welches dann anschließend in weiteren Schritten durch die Umsetzung mit Epihaloalkanen in ein glycidylether-haltiges Acrylat-Copolymerisat (B) übergeführt wird. Durch gemeinsame Extrusion der Komponenten (B), (C) und gegebenenfalls (D) können dann die Massen zu einem Pulverlack weiterverarbeitet werden. Das Copolymerisat (A) ist erfindungsgemäß durch Copolymerisation eines Monomergemischs aus folgenden Komponenten erhältlich:
(a) 0 bis 70 Gewichtsteilen Methyl(meth)acrylat,
(b) 0 bis 60 Gewichtsteilen (Cyclo)Alkylester der Acryl- und/oder Methacrylsäure mit 2 bis 18 Kohlenstoffresten im Alkyl- bzw. im Cycloalkylrest,
(c) 0 bis 90 Gewichtsteilen Vinylaromaten,
(d) 0 bis 60 Gewichtsteilen Hydroxyalkylester der Acryl- und/oder Methacrylsäure,
wobei die Summe der Gewichtsteile der Komponenten (a) bis (d) 100 ergibt, mit der Maßgabe, dass des hydroxylfunktionelle Acrylat-Copolymerisat (A) eine OH- Zahl von 10 bis 400 mg KOH/g aufweist.

Bevorzugt sind hydroxylfunktionelle Acrylat-Copolymere (A) mit einer OH-Zahl von 20 bis 300 [mg KOH/g].

Bei den Monomeren (b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. besonders geeigneter Monomere (b) sind Ethyl(meth)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornylmethacrylat, 3,3,5-Trimethylcyclohexylmethacrylat und Stearylmethacrylat. Es können ebenfalls Gemische der vorgenannten Monomeren eingesetzt werden.

Als Monomere (c) kommen Styrol, Vinyltoluol und α-Ethylstyrol in Betracht. Geeignete Monomere (d) sind Hydroxyalkylester der Acryl- und/oder Methacrylsäure mit 2 bis 6, vorzugsweise 2 bis 4 Kohlenstoffatomen im Hydroxylrest, wie z.B. 2-Hydroxyethyl(meth)acrylat, Hydroxypropyl(meth)acrylat, d.h. das bei der Anlagerung von Propylenoxid an (Meth)Acrylsäure entstehende Isomerengemisch, 4-Hydroxy-n-butylacrylat oder auch Anlagerungsprodukte von ε-Caprolacton an die vorgenannten einfachen Hydroxyalkylester. Der Begriff "Hydroxyalkylester" soll somit auch Estergruppen aufweisende Reste umfassen, wie sie durch Anlagerung von ε-Caprolacton an einfache Hydroxyalkylester, mit 2 bis 6 C-Atomen in Hydroxylest, entstehen. Weiterhin sind auch Umsetzungsprodukte von Glycidyl(meth)acrylat mit gesättigten Monocarbonsäuren, sowie Umsetzungsprodukte von (Meth)Acrylsäure mit gesättigten Monoepoxiden, die zusätzlich noch OH-Gruppen tragen können als "Hydroxyalkyl-ester" der (Meth)Acrylsäure anzusehen und daher ebenfalls als Monomere d) geeignet.

Die Herstellung der Copolymerisate kann durch Copolymerisation der beispielhaft genannten Monomere a) bis d) nach üblichen radikalischen Polymerisationsverfahren erfolgen, wie beispielsweise Lösungs- und Emulsions-, PerI- oder Substanzpolymerisation. Dabei werden die Monomeren bei Temperaturen von 60 bis 160 °C, vorzugsweise 80 bis 150 °C, in Gegenwart von Radiaklbildnern und gegebenenfalls Molekulargewichtsreglern copolymerisiert.

Die Herstellung der hydroxylfunktionellen Acrylat-Copolymerisate erfolgt in inerten Lösungsmitteln. Geeignete Lösungsmittel sind beispielsweise Aromaten, wie Benzol, Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton, Methylethylketon, Methylisobutylketon, Methyl-n-amylketon, Methylisoamylketon oder beliebige Gemische derartiger Lösungsmittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können hergestellt werden, indem man die Reaktionsmischung mit konstanter Geschwindigkeit in einen Rührkessel einlaufen läßt, ohne das Polymerisat abzuführen.

Man kann auch einen Teil der Monomeren beispielsweise in Lösungsmitteln der genannten Art vorlegen und die restlichen Monomeren und Hilfsmittel getrennt oder gemeinsam in diese Vorlage bei der Reaktionstemperatur eintragen.

Im allgemeinen erfolgt die Polymerisation unter Atmosphärendruck; sie kann jedoch auch bei Drücken bis zu 2,5 MPa (25 bar) durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z.B. aliphatische Azoverbindungen, wie Azodiisobuttersäurenitril, Azo-bis-2-methylvaleronitril, 1,1 '-Azo-bis-1-cyclohexannitril und 2,2'-Azo-bis-isobuttersäurealkylester; symmetrische Diacylperoxide, wie z.B. Acetyl-, Propionyl- oder Butyrylperoxid, mit Brom-, Nitro-, Methyl- oder Methoxygruppen substituierte Benzoylperoxide, Lauroylperoxide; symmetrische Peroxydicarbonate, z.B. tert.-Butylperbenzoat; Hydroperoxide, wie beispielsweise tert.-Butylhydroperoxid, Cumolhydroperoxid; Dialkylperoxide, wie Dicumylperoxid, tert.-Butylcumylperoxid oder Di-tert.-butylperoxid.

Zur Regelung des Molekulargewichts der Copolymerisate können übliche Regler bei der Herstellung eingesetzt werden. Beispielhaft genannt seien Mercaptopropionsäure, tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozeß zugeführt werden, bei dem das Lösungsmittel beispielsweise in einem Ausdampfextruder oder Sprühtrockner bei ca. 120 bis 160 °C und einem Vakuum von 0,01 bis 0,03 MPa (100 bis 300 (mbar) entfernt, und die erfindungsgemäß zu verwendenden Copolymerisate gewonnen werden.

Die Umsetzung der hydroxylfunktionellen Copolymerisate A mit Epihaloalkanen zu den erfindungsgemäßen glycidyletherhaltigenAcrylat-Copolymeren B erfolgt, in der für die Herstellung von Glycidylethern üblichen Art.

Die Glycidylether von hydroxylfunktionellen Acrylat-Copolymeren erhält man, indem man das hydroxylfunktionelle Acrylat-Copolymer mit Epihaloalkanen umsetzt. In der Regel erfolgt diese Umsetzung in einem Zweistufen-Verfahren. In der ersten Stufe wird Epihaloalkan an die Hydroxylgruppe des Acrylat-Copolymers addiert, wobei sich Halohydrinether bilden. Diese Reaktion wird durch Lewissäuren, wie z.B. Bortrifluorid, Zinntetrachlorid usw. katalysiert. Als Lösungsmittel sind inerte Lösungsmittel, wie z.B. Benzol, Toluol, Chloroform usw. geeignet, oder es wird in einem Überschuß von Epihaloalkan, welches gleichzeitig als Lösungsmittel dient, gearbeitet.

In der nachfolgenden zweiten Stufe bildet sich durch eine Dehydrohalogenierungsreaktion in einem inerten Lösungsmittel, beispielhaft sei Toluol genannt, unter Verwendung einer wäßrigen Laugenlösung, beispielhaft sei Natriumhydroxidlösung genannt, das glycidyletherhaltige Acrylat-Copolymer.

Die bei dieser Reaktion anfallende Salzlösung und Wasser bilden zusammen mit dem Wasser der Laugenlösung eine spezifisch schwerere wäßrige Ablauge, die nach der Umsetzung in einfacher Weise von der organischen Schicht abgetrennt werden kann.

Die Reaktionstemperatur in der ersten Stufe beträgt ca. 80 °C bei einer Reaktionszeit von ca. 30 min. Die Reaktionstemperatur in der zweiten Stufe beträgt 50 °C bei einer Reaktionszeit von ca. 60 min.

Die Umsetzung des hydroxylfunktionellen Acrylat-Copolymers kann auch in einer ersten Stufenreaktion erfolgen. Es handelt sich dabei um eine phasentransferkatalysierte Zweiphasenreaktion zwischen dem hydroxylfunktionellen Acrylat-Copolymer, Epihaloalkan und einer wäßrigen Laugenlösung, bevorzugt Natriumhydroxidlösung. Als Phasentransferkatalysatoren werden dabei quarternäre Ammonium- und/oder Phosphoniumverbindungen eingesetzt, z.B. Benzyltrimethylammoniumbromid, Tetramethylammoniumbromid, Benzyltrimethylammoniumchlorid, Ethyltriphenylphosphoniumbromid und Butyltriphenylphosphoniumchlorid, bevorzugt wird Benzyltrimethylammoniumbromid.

Die Reaktionstemperaturstufe beträgt 60 °C bei einer Reaktionszeit von ca. 60 min. Eine Variation des Phasentransferverfahrens ist das sogenannte Azeotropverfahren, bei dem während der Zweiphasenreaktion das vorhandene und entstehende Wasser mit dem Epihaloalkan azeotrop unter Vakuum abdestilliert wird.

Beispielhaft seien als geeignete Epihaloalkane 1-Chlor-2,3-epoxypropan (Epichlorhydrin), 1-Chlor-2-methyl-2,3-epoxypropan und 1-Chlor-2,3-epoxybutan genannt. Bevorzugt wird 1-Chlor-2,3-epoxypropan. Natürlich können auch noch weiter Epihaloalkane erfolgreich eingesetzt werden, z.B. Epibromhydrin.

Die glycidylether-haltigen Acrylat-Copolymere B besitzen eine Glasübergangstemperatur von 20 bis 120 °C. Die bevorzugte Glasübergangstemperatur liegt im Bereich von 30 bis 90 °C. Die Molekulargewichte (Mw) betragen im allgemeinen 1.000 bis 30.000, vorzugsweise 1.000 bis 20.000. Die Epoxidzahl der erfindungsgemäßen glycidylether-haltigen Acrylat-Copolymeren liegt im Bereich von 0,018 bis 0,510, insbesondere von 0,035 bis 0,412 [Äquiv./100 g].

Als Härtungsmittel - Komponente C - können aliphatische mehrbasische Säuren, bevorzugt zweibasische Säuren, wie z.B. Adipinsäure, Pimelinsäure, Suberinsäure, Azelainsäure, Sebacinsäure, Malonsäure, Bernsteinsäure, Glutarsäure, 1,12-Dedecandisäure usw. verwendet werden. Die Anhydride dieser Säuren können ebenfalls verwendet werden, z.B. Glutarsäureanhydrid, Bernsteinsäureanhydrid sowie die Polyanhydride dieser Dicarbonsäuren. Diese Polyanhydride werden durch intermolekulare Kondensation der genannten aliphatischen zweibasischen Dicarbonsäuren erhalten.

Beispiel sind Adipinsäure(poly)anhydrid,Azelainsäure(poly)anhydrid,Sebacinsäu-. re(poly)anhydrid, Dodecandisäure(poly)anhydrid usw. Die Polyanhydride haben ein Molekulargewicht (Gewichtsmittel, bezogen auf Polystyrolstandard) von 1.000 bis 5.000. Die Polyanhydride können auch mit Polyol modifiziert werden.

Die Polyanhydride können auch im Gemisch mit den aliphatischen zweibasischen Dicarbonsäuren als Härtungsmittel eingesetzt werden oder im Gemisch mit Hydroxycarbonsäuren, die Schmelzpunkte zwischen 40 und 150 °C besitzen, z.B. 12-Hydroxystearinsäure, 2- bzw. 3- bzw. 10-Hydroxyoctadecansäure, 2-Hydroxymyristinsäure.

Auch cycloaliphatische Dicarbonsäuren, wie z.B. 1,4-Cyclohexandicarbonsäure oder deren Polyanhydride können als Härtungsmittel verwendet werden.

Geeignete Härtungsmittel sind auch amorphe und semikristalline Copolyester. Sowohl die amorphen als auch die semikristallinen Copolyester können nach den für Polyester bekannten Kondensationsverfahren (Veresterung und/oder Umesterung) nach Stand der Technik hergestellt werden. Auch geeignete Katalysatoren, wie z.B. Dibutylzinnoxid oder Titantetrabutylat können gegebenenfalls verwendet werden.

Geeignete amorphe carboxylfumktionelle Copolyesterharze besitzen eine Säurezahl von 10 bis 200 [mg KOH/g] und eine Glasübergangstemperatur von > 40 °C. Amorphe carboxylfunktionelle Copolyester enthalten als Säurekomponenten hauptsächlich aromatische mehrbasische Carbonsäuren, wie z.B. Terephthalsäure, Isophthalsäure, Phthalsäure, Pyromellitsäure, Trimellitsäure, 3,6-Dichlorphthalsäure, Tetrachlorphthalsäure und soweit verfügbar deren Anhydrid, Chlorid oder Ester. Meistens enthalten sie mindestens 50 Mol.-% Terephthalsäure und/oder Isophthalsäure, bevorzugt 80 Mol-%. Der Rest der Säuren (Differenz zu 100 Mol-%) besteht aus aliphatischen und/oder cycloaliphatischen mehrbasischen Säuren, wie z.B. 1,4-Cyclohexandicarbonsäure, Tetrahydrophthalsäure, Hexahydroendomethylenterephthalsäure, Hexachlorphthalsäure, Azelainsäure, Sebacinsäure, Decandicarbonsäure, Adipinsäure, Dodecandicarbonsäure, Bernsteinsäure, Maleinsäure oder dimere Fettsäuren, Hydroxycarbonsäuren und/oder Lactone, wie z.B. 12-Hydroxystearinsäure, ε-Caprolacton oder Hydroxypivalinsäureester des Neopentylglykols, können ebenfalls verwendet werden. In geringen Mengen kommen auch Monocarbonsäuren, wie z.B. Benzoesäure, Tertiärbutylbenzoesäure, Hexahydrobenzoesäure und gesättigte aliphatische Monocarbonsäuren, zum Einsatz.

Als geeignete Alkoholkomponenten seien aliphatische Diole genannt, wie z.B. Ethylenglykol, 1,3-Propandiol, 1,2-Propandiol, 1,2-Butandiol, 1,3-Butandiol, 1,4-Butandiol, 2,2-Dimethyl-1,3-propandiol (Neopentylglykol), 2,5-Hexandiol, 1,6-Hexandiol, 2,2-[Bis-(4-hydroxycyclohexyl)]propan, 1,4-Dimethylolcyclohexan, Diethylenglykol, Dipropylenglykol und 2,2-Bis-[4-(2-hydroxy)]phenylpropan. In geringen Mengen kommen auch Polyole zum Einsatz, wie z.B. Glycerol, Hexantriol, Penaerytritol, Sorbitol, Trimethylolethan,Trimethylolpropan und Tris(2-hydroxy)isocyanurat. Auch Epoxyverbindungen können anstelle von Diolen oder Polyolen verwendet werden. Bevorzugt beträgt der Anteil an Neopentylglykol und/oder Propylenglykol in der Alkoholkomponente mindestens 50 Mol-%, bezogen auf Gesamtsäuren.

Geeignete semikristalline Polyester besitzen eine Säurezahl von 10 bis 400 [mg KOH/g] und einen genau definierten DSC-Schmelzpunkt. Es handelt sich bei den semikristallinen Polyestern um Kondensationsprodukte aus aliphatischen Polyolen, bevorzugt aliphatischen Diolen und aliphatischen und/oder cycloaliphatischen und/oder aromatischen mehrbasischen Carbonsäuren, bevorzugt zweibasische Säuren. Beispielhaft seien als aliphatische Polyole genannt: Ethylenglykol (1,2-Ethanoldiol), Propylenglykol (1,3-Propandiol), Butylenglykol (1,4-Butandiol), 1,6-Hexandiol, Neopentylglykol, Cyclohexandimethanol, Trimethylolpropan usw. Bevorzugt sind aliphatische Diole, wie z.B. Ethylenglykol, Butylenglykol oder 1,6-Hexandiol.

Geeignete mehrbasische Carbonsäuren sind aliphatische Dicarbonsäuren, bevorzugt C₄-C₂₀-Dicarbonsäuren, wie z.B. Adipinsäure, Azelainsäure, Sebazinsäure, Dodecandicarbonsäure, Bernsteinsäure, Undecandicarbonsäure und aromatische Dicarbonsäuren, wie z.B. Terephthalsäure, Isophthalsäure, Phthalsäure und deren Hydrierungsprodukte, wie z.B. 1,4-Cyclohexandicarbonsäure. Bevorzugt sind aliphatische Dicarbonsäuren mit 6 bis 12 Kohlenstoffatomen. Natürlich können auch Mischungen verschiedener Polyole und mehrbasische Carbonsäuren verwendet werden. Geeignete carboxylfunktionelle Acrylatpolymere besitzen eine Säurezahl von 10 bis 400 [mg KOH/g]. Die Zusammensetzung und Herstellung ist analog zum Acrylat-Copolymerisat A.

Auch Gemische verschiedener geeigneter Härter können in den wärmehärtbaren pulverförmigen Beschichtungsmassen verwendet werden.

Die Menge der als Härtungsmittel - Komponente (C) - eingesetzten Anhydride und Säuren, bezogen auf das Acrylharz kann über einen weiten Bereich variieren und richtet sich nach der Anzahl der Glycidylethergruppen im Acrylatharz. Im allgemeinen wird ein Molverhältnis von Carboxylgruppen bzw. Anhydridgruppen zu Glycidylethergruppen von 0,4 bis 1,4 : 1, bevorzugt von 0,8 bis 1,2 : 1 gewählt.

Im erfindungsgemäßen Beschichtungssystem können die für die Herstellung und die Verwendung von Pulverlacken üblichen Pigmente und/oder Füllstoffe und/oder Additive vorhanden sein.

Dabei handelt es sich um Additive aus der Gruppe Beschleuniger, Verlauf- und Entgasungsmittel, Hitze-, UV- und/oder HALS-Stabilisatoren und/oder Triboadditive sowie erforderlicherweise um Mattierungsmittel, wie z.B. Wachse.

Die Herstellung der erfindungsgemäßen Pulverlacke erfolgt vorzugsweise in der Schmelze durch gemeinsame Extrusion sämtlicher Formulierungsbestandteile bei Temperaturen zwischen 60 bis 140 °C. Das Extrudat wird anschließend abgekühlt, gemahlen und auf eine Korngröße kleiner als 90 µm abgesiebt. Grundsätzlich sind auch andere Verfahren zur Herstellung der Pulverlacke geeignet, wie, z.B. Vermischen der Formulierungsbestandteile in Lösung und anschließende Ausfällung oder destillative Entfernung der Lösungsmittel.

Die Applikation der erfindungsgemäßen Pulverlacke erfolgt nach den für Pulverlacke üblichen Verfahren, z.B. mittels elektrostatischer Sprühvorrichtungen (Corona oder Tribo) oder nach dem Wirbelbett-Verfahren.

Die Herstellung und die Eigenschaften der erfindungsgemäßen wärmehärtbaren pulverförmigen Beschichtungsmassen werden nachfolgend beispielhaft dargestellt.

### Herstellung der hydroxylfunktionellen Acrylat-Copolymeren

### Beispiel 1

### Allgemeine Herstellvorschrift

In einem Edelstahlreaktor mit Rühr-, Kühl- und Heizvorrichtung sowie elektronischer Temperatursteuerung wird Teil I (siehe Tabelle 1) vorgelegt und unter Stickstoff aufgeheizt bis zum Rückfluß. Dann werden parallel Teil II und Teil III (siehe Tabelle 1) langsam innerhalb von 3 Stunden zugegeben, wobei das Reaktionsgemisch unter Rückfluß gekocht wird. Nachdem die Zugabe von Teil II und Teil III beendet ist, wird das Reaktionsgemisch für weitere 2 Stunden unter Rückfluß gekocht. Anschließend wird das Lösungsmittel unter Vakuum aus dem Reaktionsgemisch entfernt.

**Tabelle 1**

| **Hydroxylgruppenhaltige Acrylat-Copolymere** **(Gewichtsangaben in g)** | | |
|---|---|---|
| | Beispiel 1 | Beispiel 2 |
| Harz-Nr. | I | II |
| Teil I | | |
| Xylol | 1.000,00 | 1.000,00 |
| Teil II | | |
| Ditertiärbutylperoxid | 46,25 | 46,25 |
| Xylol | 78,75 | 78,75 |
| Teil III | | |
| Hydroxyethylmethacrylat | 537,43 | 429,89 |
| n-Butylacrylat | 185,00 | 185,00 |
| Methylmethacrylat | 780,70 | 888,23 |
| Styrol | 809,38 | 809,38 |
| Mercaptopropionsäure | 57,90 | 57,90 |

**Tabelle 2**

| **Eigenschaften Beispiele 1 bis 2** | | |
|---|---|---|
| | Beispiel 1 | Beispiel 2 |
| Harz-Nr. | I | II |
| OH-Zahl [mg OH/g] | 98,0 | 78,0 |
| Tg [°C] (berechnet) | 71 | 73 |
| Molekulargewicht (Mw) | 7.900 | 7.800 |

### Herstellung der erfindungsgemäßen epoxidgruppenhaltigen Acrylat-Copolymeren

### Beispiele 3 bis 6

### Beispiel 3

In einen beheizbaren 20 Liter-Reaktor, versehen mit Thermometer, Rührer und Rückflußkolonne werden 560 g Harz-Nr. I in 2.000 g Toluol gelöst. Nach der Zugabe von 18 mℓ Bortrifluoridethyletherat wird die Temperatur auf 80 °C erhöht und innerhalb von einer Stunde 100 g Epichlorhydrin zugetropft. Danach wird während 30 Minuten bei 80 °C nachgerührt und dann auf 50 °C abgekühlt. Nach der Zugabe von 200 g wäßriger Natronlauge (22 %ig) rührt man bei 50 °C für eine weitere Stunde. Danach wird die wäßrige Phase abgetrennt. Nach der Vakuumdestillation der organischen Phase bei einer Temperatur von 130 °C unter vermindertem Druck von 133 Pa (1 mm Hg) erhält man Harz-Nr. III (Eigenschaften, siehe Tabelle 3).

### Beispiel 4

In einen beheizbaren 20 Liter-Reaktor, versehen mit Thermometer, Rührer und Rückflußkolonne werden 560 g Harz-Nr. I in 2.000 g Toluol und 1.000 g Epichlorhydrin bei 60 °C gelöst. Nach der Zugabe von 18,6 g Benzyltrimethylammoniumchlorid gibt man 200 g wäßrige Natronlauge (22 %ig) zu und rührt während einer Stunde bei 60 °C. Danach wird die wäßrige Phase abgetrennt. Nach der Vakuumdestillation der organischen Phase bei einer Temperatur von 130 °C unter vermindertem Druck von 133 Pa (1 mm Hg) erhält man Harz-Nr. IV (Eigenschaften, siehe Tabelle 3).

### Beispiel 5

In einen beheizbaren 20 Liter-Reaktor, versehen mit Thermometer, Rührer und Rückflußkolonne werden 700 g Harz-Nr. I in 2.000 g Toluol gelöst. Nach der Zugabe von 18 mℓ Bortrifluoridethyletherat wird die Temperatur auf 80 °C erhöht und innerhalb von einer Stunde 100 g Epichlorhydrin zugetropft. Danach wird während 30 Minuten bei 80 °C nachgerührt und dann auf 50 °C abgekühlt. Nach der Zugabe von 200 g wäßriger Natronlauge (22 %ig) rührt man bei 50 °C für eine weitere Stunde. Danach wird die wäßrige Phase abgetrennt. Nach der Vakuumdestillation der organischen Phase bei einer Temperatur von 130 °C unter vermindertem Druck von 133 Pa (1 mm Hg) erhält man Harz-Nr. V (Eigenschaften, siehe Tabelle 3).

### Beispiel 6

in einen beheizbaren 20 Liter-Reaktor, versehen mit Thermometer, Rührer und In einen beheizbaren 20 Liter-Reaktor, versehen mit Thermometer, Rührer und Rückflußkolonne werden 700 g Harz-Nr. I in 2.000 g Toluol und 1.000 g Epichlorhydrin bei 60 °C gelöst. Nach der Zugabe von 18,6 g Benzyltrimethylammoniumchlorid gibt man 200 g wäßrige Natronlauge (22 %ig) zu und rührt während einer Stunde bei 60 °C. Danach wird die wäßrige Phase abgetrennt. Nach der Vakuumdestillation der organischen Phase bei einer Temperatur von 130 °C unter vermindertem Druck von 133 Pa (1 mm Hg) erhält man Harz-Nr. VI (Eigenschaften, siehe Tabelle 3).

**Tabelle 3**

| **Eigenschaften Beispiele 4 bis 6** | | | | |
|---|---|---|---|---|
| | Beispiel 3 | Beispiel 4 | Beispiel 5 | Beispiel 6 |
| Harz-Nr. | III | IV | V | VI |
| Ausgangsharz | I | I | II | II |
| E-Zahl [Äquiv./100 g] | 0,161 | 0,160 | 0,131 | 0,132 |
| Tg [°C] (berechnet) | 69 | 70 | 70 | 71 |
| Molekulargewicht (Mw) | 8.500 | 8.500 | 8.300 | 8.300 |

### Herstellung der Pulverlacke

### Beispiele 7 und 8

830 Gewichtsteile der Harze III oder Harz IV, 160 Gewichtsteile Dodecandicarbonsäure, 5 Gewichtsteile Resiflow® PV 88 und 5 Gewichtsteile Benzoin werden in einem Henschelmischer bei 700 Upm während 30 sek trocken gemischt und anschließend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die Pulverlacke werden elektrostatisch (Corona- oder Tribo) auf Aluminiumbleche (Q-panel AL-36 5005 H 14/08 (0,8 mm) appliziert und bei einer Einbrenntemperatur von 200 °C und einer Einbrennzeit von 15 min. ausgehärtet.

Tabelle 4 zeigt die lacktechnischen Eigenschaften der Beispiele 7 bis 10.

### Beispiele 9 und 10

850 Gewichtsteile der Harze III oder Harz IV, 140 Gewichtsteile Dodecandicarbonsäure, 5 Gewichtsteile Resiflow® PV 88 und 5 Gewichtsteile Benzoin werden in einem Henschelmischer bei 700 Upm während 30 sek trocken gemischt und anschließend auf einem Buss-Co-Kneter (PLK 46) bei einer Manteltemperatur von 100 °C, gekühlter Schnecke und einer Schneckenumdrehung von 150 Upm extrudiert. Das Extrudat wird gekühlt, gemahlen und auf kleiner als 90 µm abgesiebt.

Die Pulverlacke werden elektrostatisch (Corona- oder Tribo) auf Aluminiumbleche (Q-panel AL-36 5005 H 14/08 (0,8 mm) appliziert und bei einer Einbrenntemperatur von 200 °C und einer Einbrennzeit von 15 min. ausgehärtet.

Tabelle 4 zeigt die lacktechnischen Eigenschaften der Beispiele 7 bis 10.

**Tabelle 4**

| | Beispiel 7 | Beispiel 8 | Beispiel 9 | Beispiel 10 |
|---|---|---|---|---|
| Harzbasis | III | IV | V | VI |
| Gelierzeit Kofler-Bank 200 °C | 30 | 31 | 27 | 28 |
| Glanz (60 ° DIN 67530) | 109 | 108 | 108 | 109 |
| Verlauf | sehr gut | sehr gut | sehr gut | sehr gut |
| Erichsentiefung (DIN 53156) (mm) | 9,9 | 9,8 | 9,8 | 9,9 |
| Gitterschnitt (DIN 52151) | 0 | 0 | 0 | 0 |
| Impact (ASTM D 2794, rückseitig) | 30 | 40 | 30 | 20 |

## Patentansprüche

1. Verfahren zur Herstellung von Pulverlacken auf Basis von glycidyletherhaltigen Acrylat-Copolymerisaten, **dadurch gekennzeichnet, dass** ein hydroxylfunktionelles Acrylat-Copolymerisat (A) durch radikalische Copolymerisation eines Monomerengemisches aus:
(a) 0 bis 70 Gew.-Teilen Methyl(meth)acrylat,
(b) 0 bis 60 Gew.-Teilen Alkyl- oder Cycloalkylester der Acryl- und/oder Methacrylsäure mit 2 bis 18 C-Atomen,
(c) 0 bis 90 Gew.-Teilen Vinylaromaten,
(d) 0 bis 60 Gew.-Teilen Hydroxyalkylester der Acryl- und/oder Methacrylsäure,
wobei die Summe der Gewichtsteile der Komponenten (a) bis (d) 100 ergibt, mit der Maßgabe, dass das hydroxylfunktionelle Acrylat-Copolymerisat (A) eine OH-Zahl von 10 bis 400 mgKOH/g aufweist, hergestellt wird, welches durch Umsetzung mit Epihaloalkanen in ein glycidyletherhaltiges Acrylat-Copolymerisat (B) überführt und anschließend die Komponente (B) mit einer Komponente (C),
einer aliphatischen und/oder cycloaliphatischen mehrbasischen Säure und/oder deren Anhydrid und/oder einem polymodifizierten Anhydrid einer mehrbasischen Säure und/oder amorphem oder semikristallinem carboxyfunktionellen Copolyesterharz und/oder carboxyfunktionellen Acrylharzen, und gegenbenenfalls zusätzlichen Pigmenten und/oder Füllstoffen und/oder Additiven (D) gemeinsam extrudiert und zu einem Pulverlack verarbeitet wird.

2. Verfahren gemäß Anspruch 1, **dadurch gekennzeichnet, dass** man die radikalische Copolymerisation bei Temperaturen von 60 bis 160°C in Gegenwart von Radikalbildnem und wahlweise Molekulargewichtsreglern durchführt.

3. Verfahren nach Anspruch 1 und 2, **dadurch gekennzeichnet, dass** die radikalische Copolymerisation als Lösungs- oder Substanzpolymerisation durchgeführt wird.

4. Verfahren nach einem der Ansprüche 1 bis 3, **dadurch gekennzeichnet, dass** die radikalische Copolymerisation kontinuierlich durch gleichmäßiges Eindosieren des Monomerengemisches und von Radikalbildnern und kontinuierliches Abführen des Copolymerisates erfolgt.

5. Verfahren nach einem der Ansprüche 1 bis 4, **dadurch gekennzeichnet, dass** die Polymerisation bei Drücken bis zu 2,5 MPa (25 Bar) durchgeführt wird.

6. Verfahren nach einem der Ansprüche 1 bis 4, **dadurch gekennzeichnet, dass** die Polymerisation bei 0,1 MPa (Atmosphärendruck) durchgeführt wird.

7. Verfahren nach einem der Ansprüche 1 bis 6, **dadurch gekennzeichnet, dass** Regler in Mengen von 0,1 bis 10 Gew.-%, bezogen auf die Gesamtmenge der Monomeren, zugegeben werden.

8. Verfahren nach Anspruch 1, **dadurch gekennzeichnet, dass** man als Epihaloalkan eine Verbindung aus der Gruppe aus 1-Chloro-2,3-epoxypropan (Epichlorhydrin), 1-Chloro-2-methyl-2,3-epoxypropan, 1 -Chloro-2,3-epoxybutan, Epibromhydrin einsetzt.

9. Verfahren nach Anspruch 1, **dadurch gekennzeichnet, dass** das Acrylat-Polymerisat (A) eine OH-Zahl von 20 bis 300 mgKOH/g aufweist.

10. Verfahren nach Anspruch 1, **dadurch gekennzeichnet, dass** die Alkyl- oder Cycloalkylester (b) ausgewählt werden aus der Gruppe aus Ethyl(meth)acrylat, n-Propyl(meth)acrylat, Isopropyl(meth)acrylat, n-Butyl(meth)acrylat, Isobutyl(meth)acrylat, tert-Butyl(meth)acrylat, 2-Ethylhexyl(meth)acrylat, Cyclohexylmethacrylat, Neopentylmethacrylat, Isobornylmethacrylat, 3,3,5-Trimethylcyclohexylmethacrylat, Stearylmethacrylat und deren Gemischen.

11. Verfahren gemäß Anspruch 1, **dadurch gekennzeichnet, dass** die Vinylaromaten (c) ausgewählt werden aus der Gruppe aus Styrol, Vinyltoluol, α-Ethylstyrol.

12. Verfahren gemäß Anspruch 1, **dadurch gekennzeichnet, dass** die Hydroxyalkylester der Acryl- und/oder Methacrylsäure (d) 2 bis 6 C-Atome im Hydroxylrest aufweisen.

13. Verfahren gemäß Anspruch 1, **dadurch gekennzeichnet, dass** die Hydroxyalkylester der Acryl- und/ oder Methacrylsäure (d) 2 bis 4 C-Atome im Hydroxylrest aufweisen.

14. Verfahren nach Anspruch 1, **dadurch gekennzeichnet, dass** Komponente (C) eine gesättigte aliphatische Carbonsäure mit 4 bis 12 C-Atomen oder eine cycloaliphatische Dicarbonsäure mit 8 bis 15 C-Atomen ist.

15. Verfahren nach einem der vorhergehenden Ansprüche, **dadurch gekennzeichnet, dass** man in der Schmelze durch gemeinsame Extrusion sämtlicher Formulierungsbestandteile sowie zusätzlich von den üblichen Pigmenten und/oder Füllstoffen und/oder Additiven, bei Temperaturen zwischen 60 und 140° C, ein Extrudat herstellt, dieses anschließend abkühlt, mahlt und auf eine Korngröße von < 90 µm absiebt.

16. Pulverlack herstellbar nach dem Verfahren nach den Ansprüchen 1 bis 15.

17. Verwendung des verfahrensgemäß hergestellten Pulverlacks nach den Ansprüchen 1 bis 16 zur Herstellung von Schutzschichten.

## Claims

1. Process for preparing powder coatings based on acrylate copolymers containing glycidyl ether, **characterized in that**, a hydroxyl-functional acrylate copolymer (A) is prepared by free-radical copolymerization a monomer mixture consisting of:
(a) from 0 to 70 parts by weight of methyl (meth)acrylate,
(b) from 0 to 60 parts by weight of alkyl or cycloalkyl esters of acrylic and/or methacrylic acid having 2 to 18 C atoms,
(c) from 0 to 90 parts by weight of vinylaromatic compounds,
(d) from 0 to 60 parts by weight of hydroxyl alkyl esters of acrylic and/or methacrylic acid,
the sum of the parts by weight of components (a) to (d) being 100, with the proviso that the hydroxy-Functional-Acrylat-copolymer (A) has an OH number of from 10 to 400 mg of KOH/g, and is converted by reaction with epihaloalkanes into an acrylate copolymer (B) subsequently containing glycidyl ether, and component (B) is extruded conjointly with a component (C):
an aliphatic and/or cycloaliphatic polybasic acid and/or its anhydride and/or a polymodified anhydride of a polybasic acid and/or amorphous or semicrystalline carboxy-functional copolyester resin and/or carboxy-functional acrylic resins, and optionally additional pigments and/or fillers and/or additives (D), processed to give a powder coating.

2. Process according to Claim 1, **characterized in that** the free-radical copolymerization is conducted at temperatures of from 60 to 160°C in the presence of free-radical initiators and optionally molecular weight regulators.

3. Process according to Claim 1 and 2, **characterized in that** the free-radical copolymerization is conducted as a solution polymerization or bulk polymerization.

4. Process according to one of Claims 1 to 3, **characterized in that** the free-radical copolymerization is carried out continuously by metered addition at a uniform rate of the monomer mixture and of free-radical initiators and by continuous removal of the copolymer.

5. Process according to one of Claims 1 to 4, **characterized in that** the polymerization is conducted at pressures of up to 2.5 MPa (25 bar).

6. Process according to one of Claims 1 to 4, **characterized in that** the polymerization is conducted at 0.1 MPa (atmospheric pressure).

7. Process according to one of Claims 1 to 6, **characterized in that** regulators are added in amounts of from 0.1 to 10% by weight, based on the overall amount of the monomers.

8. Process according to Claim 1, **characterized in that** the epihaloalkane employed is a compound from the group consisting of 1-chloro-2,3-epoxypropane (epichlorohydrin), l-chloro-2-methyl-2,3-epoxypropane, 1-chloro-2,3-epoxybutane and epibromohydrin.

9. Process according to Claim 1, **characterized in that** the acrylate polymer (A) has an OH number of from 20 to 300 mg of KOH/g.

10. Process according to Claim 1, **characterized in that** the alkyl or cycloalkyl esters (b) are selected from the group consisting of ethyl (meth)acrylate, n-propyl (meth)acrylate, isopropyl (meth)acrylate, n-butyl (meth)acrylate, isobutyl (meth)acrylate, tert-butyl (meth)acrylate, 2-ethylhexyl (meth)acrylate, cyclohexyl methacrylate, neopentyl methacrylate, isobornyl methacrylate, 3,3,5-trimethylcyclohexyl methacrylate, stearyl methacrylate and mixtures thereof.

11. Process according to Claim 1, **characterized in that** the vinylaromatic compounds (c) are selected from the group consisting of styrene, vinyltoluene and α-ethylstyrene.

12. Process according to Claim 1, **characterized in that** the hydroxyalkyl esters of acrylic and/or methacrylic acid (d) have 2 to 6 C atoms in the hydroxyl radical.

13. Process according to Claim 1, **characterized in that** the hydroxyalkyl esters of acrylic and/or methacrylic acid (d) have 2 to 4 C atoms in the hydroxyalkyl radical.

14. Process according to Claim 1, **characterized in that** component (C) is a saturated aliphatic carboxylic acid having 4 to 12 C atoms or a cycloaliphatic dicarboxylic acid having 8 to 15 C atoms.

15. Process according to one of the preceding claims, **characterized in that** an extrudate is prepared in the melt by conjoint extrusion of all formulation constituents and, in addition, of the customary pigments and/or fillers and/or additives, at temperatures between 60 and 140°C, this extrudate is subsequently cooled and ground, and the ground extrudate is sieved to a particle size of <90 µm.

16. Powder coating which can be prepared by the process of Claims 1 to 15.

17. Use of the powder coating prepared according to the process according to Claims 1 to 16 for producing protective coats.

## Revendications

1. Procédé de fabrication de revêtement en poudre à base de copolymérisats d'acrylate contenant de l'éther glycidylique, **caractérisé en ce qu'**un copolymérisat d'acrylate à fonction hydroxyle (A) est fabriqué par copolymérisation radicalaire d'un mélange de monomères comprenant :
(a) entre 0 et 70 parties en poids de méthyl(méth)acrylate,
(b) entre 0 et 60 parties en poids d'alkyl ou cycloalkylester de l'acide acrylique et/ou méthacrylique avec entre 2 et 18 atomes de carbone,
(c) entre 0 et 90 parties en poids d'aromates vinyliques,
(d) entre 0 et 60 parties en poids d'hydroxyalkylester de l'acide acrylique et/ou méthacrylique,
la somme des parties en poids des constituants (a) à (d) étant de 100, dans la mesure où le copolymérisat d'acrylate à fonction hydroxyle (A) présente un indice OH compris entre 10 et 400 mg KOH/g, qui, par conversion avec des épihaloalcanes, est transformé en un copolymérisat d'acrylate contenant de l'éther glycidylique (B) et ultérieurement, le constituant (B) est extrudé en commun avec un constituant (C),
un acide aliphatique et/ou cycloaliphatique polybasique et/ou son anhydride et/ou un anhydride polymodifié d'un acide polybasique et/ou d'une résine copolyester à fonction carboxyle et/ou des résines acryliques à fonction carboxyle amorphes et/ou semi-cristallines, et éventuellement des pigments et/ou des charges et/ou des additifs (D) et converti en un revêtement en poudre.

2. Procédé selon la revendication 1, **caractérisé en ce que** la copolymérisation radicalaire est réalisée à des températures comprises entre 60 et 160 °C en présence d'agents formant des radicaux et, au choix, de régulateurs de poids moléculaire.

3. Procédé selon la revendication 1 et la revendication 2, **caractérisé en ce que** la copolymérisation radicalaire est réalisée sous forme de polymérisation en solution ou en substance.

4. Procédé selon l'une quelconque des revendications 1 à 3, **caractérisé en ce que** la copolymérisation radicalaire est réalisée en continu par dosage régulier du mélange de monomères et des agents formant des radicaux et par extraction continue du copolymérisat.

5. Procédé selon l'une quelconque des revendications 1 à 4, **caractérisé en ce que** la polymérisation est réalisée à des pressions allant jusqu'à 2,5 MPa (25 bars).

6. Procédé selon l'une quelconque des revendications 1 à 4, **caractérisé en ce que** la polymérisation est réalisée à 0,1 MPa (pression atmopshérique).

7. Procédé selon l'une quelconque des revendications 1 à 6, **caractérisé en ce que** des régulateurs sont ajoutés dans des quantités comprises entre 0,1 et 10 % en poids par rapport à la quantité totale de monomères.

8. Procédé selon la revendication 1, **caractérisé en ce qu'**on utilise comme épihaloalcane un composé du groupe 1-chloro-2,3-époxypropane (épichlorhydrine), 1-chloro-2-méthyle-2,3-époxypropane, 1-chloro-2,3-époxybutane, épibromhydrine.

9. Procédé selon la revendication 1, **caractérisé en ce que** le polymérisat d'acrylate (A) présente un indice OH compris entre 20 et 300 mg KOH/g.

10. Procédé selon la revendication 1, **caractérisé en ce que** les alkylesters ou les cycloalkylesters (b) sont choisis dans le groupe éthyl(méth)acrylate, n-propyl(méth)acrylate, isopropyl(méth)acrylate, n-butyl-(méth)acrylate, isobutyl(méth)acrylate, tert-butyl(méth)acrylate, 2-éthylhéxyl(méth)acrylate, cyclohéxylméthacrylate, néopentylméthacrylate, isobornylméthacrylate, 3,3,5-triméthylcyclohéxylméthacrylate, stéarylméthacrylate et leurs mélanges.

11. Procédé selon la revendication 1, **caractérisé en ce que** les aromates vinyliques (c) sont choisis dans le groupe styrène, toluène vinylique, α-styrène d'éthyl.

12. Procédé selon la revendication 1, **caractérisé en ce que** les hydroxyalkylesters de l'acide acrylique et/ou méthacrylique (d) ont entre 2 et 6 atomes C dans le reste hydroxyle.

13. Procédé selon la revendication 1, **caractérisé en ce que** les hydroxyalkylesters de l'acide acrylique et/ou méthacrylique (d) ont entre 2 et 4 atomes C dans le reste hydroxyle.

14. Procédé selon la revendication 1, **caractérisé en ce que** le constituant (C) est un acide carboxylique aliphatique saturé avec entre 4 et 12 atomes C ou un acide dicarboxylique cycloaliphatique avec entre 8 et 15 atomes C.

15. Procédé selon l'une quelconque des revendications précédentes, **caractérisé en ce qu'**on fabrique un produit d'extrusion dans la fonte par extrusion commune de tous les composants de formulation ainsi que, en plus, des pigments et/ou charges et/ou additifs usuels, à des températures comprises entre 60 et 140 °C, et **en ce que** ce produit est refroidi, broyé et tamisé jusqu'à une grosseur de grain de < 90 µm.

16. Revêtement en poudre qui peut être produit selon le procédé selon les revendications 1 à 15.

17. Utilisation du revêtement en poudre produit selon le procédé selon les revendications 1 à 16 pour la fabrication de couches protectrices.
